# EUROPÄISCHE PATENTSCHRIFT

(11) **EP 1 172 290 B1**
(45) Veröffentlichungstag und Bekanntmachung des Hinweises auf die Patenterteilung: **14.04.2004**
(21) Anmeldenummer: 01116590.9
(22) Anmeldetag: 10.07.2001
(51) Int. Cl.: B62L 5/00, B62L 5/04

(54) **Bremsnabe für ein Fahrrad**
Bicycle brake hub
Moyeu de frein pour bicyclette

(30) Priorität: 14.07.2000 DE 10034371
(43) Veröffentlichungstag der Anmeldung: 16.01.2002
(73) Patentinhaber: SRAM Deutschland GmbH, 97404 Schweinfurt (DE)
(72) Erfinder: Schmidt, Frank, 97422 Schweinfurt (DE); Huber, Thomas, 97425 Schwebheim (DE); Schäflein, Egon, 97464 Oberwerrn (DE)

(56) Entgegenhaltungen:
- EP-A- 0 562 288
- DE-C- 635 335
- GB-A- 195 716
- GB-A- 251 500
- US-A- 5 673 773

## Beschreibung

Die Erfindung betrifft eine Baueinheit einer Bremsnabe eines Laufrades für ein Fahrrad gemäss dem Oberbegriff des Anspruches 1.

Mit der europäischen Patentanmeldung 0 562 288 A2 ist eine Bremseinrichtung für Fahrräder bekannt geworden, die eine Nabe mit einer darin integrierbaren Bremseinrichtung offenbart, wobei die Bremseinrichtung, umfassend einen Ring, eine Bremstrommel, einen spreizbaren Reibbelag sowie einen Bremshebel mit einem Ausleger zur Ableitung von Bremsreaktionskräften auf ein Rahmenteil des Fahrrades eine Baueinheit bildet und bei der Montage mit einer Nabenhülse der Nabe drehfest zusammengefügt werden kann. Die Nabe weist eine Achse auf mit einem Durchmesser, der die Montage der Nabe in Ausfallenden eines Rahmenhinterbaues in allen Fällen möglich macht, wobei dieser Durchmesser aber nicht für alle Nabenkonstruktionen die erforderliche Festigkeit mitbringt. Zwar kann die Nabe in jeder Position mit ihrem Ausleger montiert werden, für Naben, insbesondere für Getriebenaben mit größerem Achsdurchmesser kann die vorbeschriebene Achskonstruktion nicht eingesetzt werden. Vielmehr weisen Achsen von solchen Naben an beiden Achsenden jeweils einen Zweiflach auf, der eine Schlüsselweite aufweist, die der Weite der Ausfallenden entspricht. Hierdurch wird die Achse im Einbauzustand der Nabe andererseits am Drehen gehindert und kann somit nur in zwei Positionen in den Ausfallenden fixiert werden.

Da für solche Einbaufälle der Ausleger der Bremshebels einen ganz bestimmten Winkel zu den Flächen des Zweiflaches haben muss, wird erfindungsgemäss vorgeschlagen, den Ausleger am Bremshebel zu der Flächen des Zweiflaches nicht mehr in einem bestimmten Winkel in der Baueinheit Bremsnabe festzulegen, sondern eine gegenseitige Verdrehung zuzulassen, wenigstens solange, wie die Nabe noch nicht in den Ausfallenden des Fahrrades festgelegt ist.

Es wird im einzelnen also vorgeschlagen, einen Bremsträger mit einem Bremshebel und einem daran angeordneten Ausleger sowie mit einer am Bremsträger angebrachten Bremseinrichtung als Baueinheit bei der Nabenmontage nicht mehr starr zu fixieren, sondern nur in der Weise zu befestigen, dass es möglich ist, den Zweiflach der Achse ohne Zuhilfenahme von Werk-zeugen gegenüber dem Ausleger des Bremshebels zu verdrehen. Der Vorteil einer solchen konstruktiven Lösung liegt darin, dass die Nabe als Baueinheit in die Ausfallenden des Fahrrades eingelegt werden kann, ohne die Position des Auslegers zu diesem Zeitpunkt schon zu berücksichtigen. Erst nach dem Einlegen der Achse in die Ausfallenden des Fahrrades wird der Ausleger in seine endgültige Position hineingedreht, um ihn am Rahmen befestigen zu können.

Ermöglicht wird dieses Konstruktionsdetail durch eine Fixierbuchse, die in ihrem Innendurchmesser über eine konzentrisch angeordnete Elastomereinlage verfügt, die wiederum einen Innendurchmesser aufweist, welcher geringfügig kleiner, als der Aussendurchmesser eines Gewindes auf der Achse ist. Die so entstandene Überdeckung bewirkt, dass die vorgenannte Bremseinrichtung auf das Gewinde aufgeschoben werden kann, wobei eine gewisse Kraft aufgebracht werden muss, die um so grösser ist, je grösser die Überdeckung der Elastomereinlage ist.

Die Erfindung hat es sich somit zur Aufgabe gemacht, eine Nabe mit einer Bremseinrichtung mit einem Ausleger an einem Bremshebel zu schaffen, die als Baueinheit keine Winkelrelation zwischen dem Ausleger und jeweils einem Zweiflach an einer Achse der Nabe aufweist, wobei es somit möglich werden soll, den Ausleger beliebig zu positionieren, nachdem die Achse mit ihrem Zweiflach in die Ausfallenden des Fahrrades eingelegt ist.

Die Lösung der Aufgabe ist im Kennzeichen der Ansprüche 1 und 7 beschrieben. Ausgestaltungen sind den Unteransprüchen zu entnehmen.

Anhand dreier Skizzen ist ein Ausführungsbeispiel einer Bremsnabe erläutert. Es zeigen:
- Figur 1: eine Bremseinrichtung auf einer Achse einer Nabe mit einem Bremsträger und einem Bremshebel, die auf der Achse mittels einer Fixierbuchse mit Elastomereinlage in ihren axialen Positionen gesichert sind.
- Figur 2: die Achse mit einem Zweiflach
- Figur 3: Die Achse mit der Bremseinrichtung in einem Rahmen eines Fahrrades montiert, wobei der Bremshebel über einen Ausleger mit dem Rahmen des Fahrrades verbunden ist.

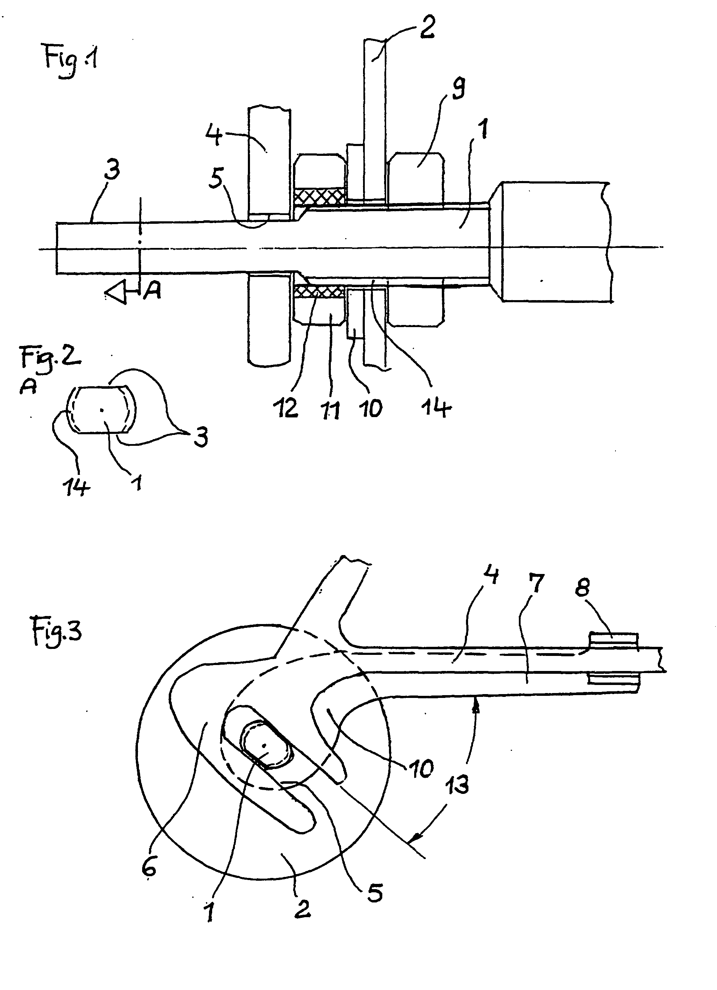

Wird mit 1 eine Achse bezeichnet, so ist mit dieser eine hier nicht dargestellte Nabe eines Fahrrades verbunden, die eine Bremstrommel aufweist, die in Reibverbindung mit einer Bremseinrichtung treten kann, welche auf einem Bremsträger 2 angeordnet ist und von einem Benutzer des Fahrrades betätigt werden kann. Die Achse 1 weist an ihrem Ende einen Zweiflach 3 auf, der gemäss Figur 2 ein Gewinde 14 doppelt unterbricht. Zur Befestigung des Bremsträgers 2 ist auf der Achse 1 ein Anschlag 9 angeordnet, der vorzugsweise auf dem Gewinde 14 verstellbar angeordnet ist und die Position des Bremsträgers 2 axial festlegt. Ebenfalls mit dem Bremsträger 2 ist ein Bremshebel 10 verbunden, der einen Ausleger 7 aufweist, an dessen Ende ein Befestigungsglied 8 angebracht ist, welches an einem Rahmen 4 des Fahrrades befestigt werden kann.

Wie aus der Figur 1 hervorgeht, liegt der Bremsträger 2 mit seinem Bremshebel 10 zwischen dem Anschlag 9 und einer Fixierbuchse 11, wobei die Fixierbuchse 11 in ihrem Innendurchmesser eine Elastomereinlage 12 aufweist, welche konzentrisch angeordnet sein kann. Der Innendurchmesser dieser Elastomereinlage 12 wiederum ist so bemessen, dass er geringfügig kleiner, als der Aussendurchmesser des Gewindes 14 ist. Wie bereits erwähnt, bewirkt die so entstandene Überdeckung, dass die vorgenannte Bremseinrichtung auf das Gewinde 14 aufgeschoben werden kann, wobei eine gewisse Kraft aufgebracht werden muss, die um so grösser ist, je grösser die Überdeckung der Elastomereinlage 12 ist.

Gemäss Figur 3 wird deutlich, wie die Einbauverhältnisse der Nabe mit ihrer Achse 1 und ihrer Bremseinrichtung sind. Der Zweiflach 3 der Achse 1 fügt sich in eine Ausnehmung 5 eines Ausfallendes 6, wobei die Ausnehmungen 5 gegenüber den Ausleger 7 einen Winkel 13 bilden, der für den Fall, dass man die Bremseinrichtung mit dem Bremsträger 2 und dem Bremshebel 10 durch die Fixierbuchse 11 drehfest befestigen könnte, nur durch eine Voreinstellung der Baueinheit Bremsnabe für einen einzigen Fahrradtyp geeignet gemacht werden könnte, um den Ausleger 7 mittels seines Befestigungsgliedes 8 am Rahmen des Fahrrades zu fixieren.

Es ergibt sich somit ein Verfahren zur Montage der vorgeschlagenen Baueinheit einer Bremsnabe im Fahrrad das sich in die folgenden Verfahrensschritte gliedert:
- Befestigung des Bremshebels10 am Bremsträger 2 auf der Achse 1 mittels einer Fixierbuchse 11, die eine Elastomereinlage 12 aufweist.
- Einschieben der Nabe mit dem Zweiflach 3 der Achse 1 in die Ausnehmung 5 des Ausfallendes 6.
- Drehen des Auslegers 7, bis ein Befestigungsglied 8 am Ende des Auslegers 7 mit dem Rahmen 4 verbunden werden kann.
- Befestigung der Nabe durch eine außerhalb des Ausfallendes 6 aufzuschraubende Stahlmutter und dadurch Fixierung der Komponenten Fixierbuchse 11, Bremshebel 10 und Bremsträger 2 zu einer Baueinheit Bremsnabe.

## Patentansprüche

1. Baueinheit einer Bremsnabe eines Laufrades für ein Fahrrad
• mit einer Achse (1), auf der die Nabe drehbar angeordnet ist,
• mit einem Zweiflach (3) auf der Achse (1) an der Stelle der Befestigung an einem Rahmen (4) des Fahrrades,
• wobei die Achse (1) in einer Ausnehmung (5) eines Ausfallendes (6) des Rahmens (4) drehfest montierbar ist und
• mit einer Bremseinrichtung, die auf einem Bremsträger (2) angeordnet ist,
• wobei ein Ausleger (7) am Bremshebel (10) mit dem Bremsträger (2) verbunden ist und mit dem Rahmen (4) zur Übertragung von Bremsreaktionskräften verbindbar ist,
**dadurch gekennzeichnet,**
**dass** der Bremshebel (10), der Bremsträger (2), ein Anschlag (9) und eine Fixierbuchse (11) axial angeordnet sind und mit der Achse (1) über den Anschlag (9) und der Fixierbuchse (11), welche zumindest teilweise eine Elastomereinlage (12) aufweist, verbunden sind.

2. Baueinheit einer Bremsnabe nach Anspruch 1,
**dadurch gekennzeichnet,**
**dass** die Elastomereinlage (12) im Innern der Fixierbuchse (11) angeordnet ist, wobei diese vorzugsweise eine konzentrische Position aufweist.

3. Baueinheit einer Bremsnabe nach Anspruch 1 oder 2,
**dadurch gekennzeichnet,**
**dass** sich die Fixierbuchse (11) schwergängig auf das Gewinde (14) aufschieben lässt.

4. Baueinheit einer Bremsnabe nach einem der Ansprüche 1 bis 3,
**dadurch gekennzeichnet,**
**dass** der Bremshebel (10) mit dem Bremsträger (2) über die Fixierbuchse (11) mit der Achse (1) verbindbar ist, wobei die Fixierbuchse (11) den Bremsträger (2) gegen einen Anschlag (9) drückt und auf diese Weise axial auf der Achse (1) fixiert.

5. Baueinheit einer Bremsnabe nach Anspruch 4,
**dadurch gekennzeichnet,**
**dass** die Befestigung zwischen dem Anschlag (9) und der Fixierbuchse (11) ein bestimmtes Haltemoment des Bremshebels (10) mit dem Bremsträger (2) auf der Achse (1) nicht übersteigt.

6. Baueinheit einer Bremsnabe nach Anspruch 4 oder 5,
**dadurch gekennzeichnet,**
**dass** das maximal mögliche Haltemoment bei der Montage des Zweiflachs (3) in der Ausnehmung (5) des Ausfallendes (6) am Rahmen (4) eine Verdrehung des Auslegers (7) am Bremshebel (10) zur Erzielung eines für die Befestigung des Auslegers (7) erforderlichen Winkels (13) erlaubt.

7. Verfahren zur Montage einer Baueinheit einer Bremsnabe mit einem Bremsträger (2) an einem Rahmen (4) eines Fahrrades,
• wobei die Nabe eine Achse (1) mit einem Zweiflach (3) aufweist,
• welcher zu einem Ausleger (7) des Bremshebels (10) am Bremsträger (2) einen Winkel (13) aufweisen muss,
• wobei der Ausleger (7) am Bremshebel (10) mit dem Bremsträger (2) verbunden ist und über Anschlag 9 und Fixierbuchse (11), in einer beliebigen Stellung auf der Achse (1) der Nabe, mit einem bestimmten Haltemoment verbunden ist,
**gekennzeichnet durch** die folgenden Verfahrensschritte bei der Montage der Bremsnabe:
Befestigung des Bremshebels (10) am Bremsträger (2) auf der Achse (1) mittels einer Fixierbuchse (11), die eine Elastomereinlage (12) aufweist;
Einschieben der Nabe mit dem Zweiflach (3) der Achse (1) in die Ausnehmung (5) des Ausfallendes (6);
Drehen des Auslegers (7), bis ein Befestigungsglied (8) am Ende des Auslegers (7) mit dem Rahmen (4) verbunden werden kann;
Befestigung der Nabe **durch** eine außerhalb des Ausfallendes (6) aufzuschraubende Stahlmutter, hierdurch wird eine axiale Fixierung der Komponenten Fixierbuchse (11), Bremshebel (10) und Bremsträger (2) zu einer Bremsnabenbaueinheit zwischen dem Ausfallende (6) und dem Anschlag (9) erreicht.

## Claims

1. Constructional unit for a brake hub of a running wheel for a bicycle
• having an axle (1) on which the hub is arranged rotatably,
• having a dihedral (3) on the axle (1) at the point at which it is fastened to a frame (4) of the bicycle,
• it being possible for the axle (1) to be fitted in a rotational fixed manner in a recess (5) of a dropout (6) of the frame (4), and
• having a braking device which is arranged on a brake anchor plate (2),
• an extension arm (7) on the brake lever (10) being connected to the brake anchor plate (2) and being connectable to the frame (4) for the transmission of brake reaction forces,
**characterized**
**in that** the brake lever (10), the brake anchor plate (2), a stop (9) and a fixing bushing (11) are arranged axially and are connected to the axle (1) via the stop (9) and the fixing bushing (11), at least part of which has an elastomer insert (12).

2. Constructional unit for a brake hub according to Claim 1,
**characterized**
**in that** the elastomer insert (12) is arranged in the interior of the fixing bushing (11), it preferably having a concentric position.

3. Constructional unit for a brake hub according to Claim 1 or 2,
**characterized**
**in that** the fixing bushing (11) can be pushed tightly onto the thread (14).

4. Constructional unit for a brake hub according to one of Claims 1 to 3,
**characterized**
**in that** the brake lever (10) can be connected together with the brake anchor plate (2) to the axle (1) via the fixing bushing (11), the fixing bushing (11) pressing the brake anchor plate (2) against a stop (9) and thereby fixing it axially on the axle (1).

5. Constructional unit for a brake hub according to Claim 4,
**characterized**
**in that** the fastening between the stop (9) and the fixing bushing (11) does not exceed a certain retaining moment of the brake lever (10) together with the brake anchor plate (2) on the axle (1).

6. Constructional unit for a brake hub according to Claim 4 or 5,
**characterized**
**in that** the maximum possible retaining moment during the installation of the dihedral (3) in the recess (5) of the dropout (6) on the frame (4) permits the extension arm (7) on the brake lever (10) to be rotated in order to obtain an angle (13) required for fastening the extension arm (7).

7. Method for installing a constructional unit for a brake hub together with a brake anchor plate (2) on a frame (4) of a bicycle,
• the hub having an axle (1) with a dihedral (3),
• which has to be at an angle (13) with respect to an extension arm (7) of the brake lever (10) on the brake anchor plate (2),
• the extension arm (7) on the brake lever (10) being connected to the brake anchor plate (2) and, via a stop (9) and fixing bushing (11), being connected in any desired position on the axle (1) of the hub, with a certain retaining moment,
**characterized by** the following method steps for the installation of the brake hub:
fastening the brake lever (10) on the brake anchor plate (2) on the axle (1) by means of a fixing bushing (11) which has an elastomer insert (12);
inserting the hub together with the dihedral (3) of the axle (1) into the recess (5) of the dropout (6);
rotating the extension arm (7) until a fastening element (8) at the end of the extension arm (7) can be connected to the frame (4);
fastening the hub by means of a steel nut which is to be screwed outside the dropout (6) and, as a result, axially fixing the components, the fixing bushing (11), brake lever (10) and brake anchor plate (2), to form a brake-hub constructional unit between the dropout (6) and the stop (9).

## Revendications

1. Unité de construction d'un moyeu de frein d'une roue mobile pour une bicyclette
- comprenant un axe (1) sur lequel le moyeu est disposé à rotation,
- comprenant un corps dièdre (3) sur l'axe (1) à l'emplacement de la fixation à un cadre (4) de la bicyclette,
- l'axe (1) pouvant être monté fixe en rotation dans un évidement (5) d'une patte d'extrémité (6) du cadre (4) et
- comprenant un dispositif de frein qui est disposé sur un support de frein (2),
- un bras (7) sur le levier de frein (10) étant connecté au support de frein (2) et pouvant être connecté au cadre (4) en vue du transfert des forces de réaction de freinage,
**caractérisée en ce que**
le levier de frein (10), le support de frein (2), une butée (9) et une douille de fixation (11) sont disposés axialement et sont connectés à l'axe (1) par le biais de la butée (9) et de la douille de fixation (11), qui présente au moins en partie une garniture en élastomère (12).

2. Unité de construction d'un moyeu de frein selon la revendication 1,
**caractérisée en ce que**
la garniture en élastomère (12) est disposée à l'intérieur de la douille de fixation (11), celle-ci présentant de préférence une position concentrique.

3. Unité de construction d'un moyeu de frein selon la revendication 1 ou 2,
**caractérisée en ce que** la douille de fixation (11) peut être poussée durement sur le filetage (14).

4. Unité de construction d'un moyeu de frein selon l'une quelconque des revendications 1 à 3,
**caractérisée en ce que**
le levier de frein (10) avec le support de frein (2) peut être connecté à l'axe (1) par le biais de la douille de fixation (11), la douille de fixation (11) pressant le support de frein (2) contre une butée (9) et le fixant de cette manière axialement sur l'axe (1).

5. Unité de construction d'un moyeu de frein selon la revendication 4,
**caractérisée en ce que**
la fixation entre la butée (9) et la douille de fixation (11) ne dépasse pas un couple de retenue déterminé du levier de frein (10) avec le support de frein (2) sur l'axe (1).

6. Unité de construction d'un moyeu de frein selon la revendication 4 ou 5,
**caractérisée en ce que**
le couple de retenue maximal possible lors du montage du corps dièdre (3) dans l'évidement (5) de la patte d'extrémité (6) sur le cadre (4) permet une rotation du bras (7) sur le levier de frein (10) pour l'obtention d'un angle (13) nécessaire pour la fixation du bras (7).

7. Procédé de montage d'une unité de construction d'un moyeu de frein avec un support de frein (2) sur un cadre (4) d'une bicyclette,
- dans lequel le moyeu présente un axe (1) avec un corps dièdre (3),
- lequel doit présenter un angle (13) par rapport à un bras (7) du levier de frein (10) sur le support de frein (2),
- le bras (7) étant connecté sur le levier de frein (10) au support de frein (2) et étant associé par le biais de la butée (9) et de la douille de fixation (11), dans une position quelconque sur l'axe (1) du moyeu, à un couple de retenue déterminé,
**caractérisé par** les étapes de procédé suivantes lors du montage du moyeu de frein :
fixation du levier de frein (10) sur le support de frein (2) sur l'axe (1) au moyen d'une douille de fixation (11) qui présente une garniture en élastomère (12) ;
enfoncement du moyeu avec le corps dièdre (3) de l'axe (1) dans l'évidement (5) de la patte d'extrémité (6) ;
rotation du bras (7), jusqu'à ce qu'un organe de fixation (8) puisse être connecté à l'extrémité du bras (7) au cadre (4) ;
fixation du moyeu par un écrou en acier à visser en dehors de la patte d'extrémité (6), ce par quoi une fixation axiale des composants douille de fixation (11), levier de frein (10) et support de frein (2) par rapport à une unité de construction de moyeu de frein est obtenue entre la patte d'extrémité (6) et la butée (9).
